(19) Europäisches Patentamt / European Patent Office / Office européen des brevets

(11) **EP 1 866 537 B1**

(12) **FASCICULE DE BREVET EUROPEEN**

(45) Date de publication et mention
de la délivrance du brevet:
**04.06.2008 Bulletin 2008/23**

(51) Int Cl.:
*F02D 37/02* (2006.01)    *F02D 41/06* (2006.01)
*F02D 41/04* (2006.01)    *F02D 41/10* (2006.01)

(21) Numéro de dépôt: **05824557.2**

(22) Date de dépôt: **12.12.2005**

(86) Numéro de dépôt international:
**PCT/FR2005/051075**

(87) Numéro de publication internationale:
**WO 2006/067346 (29.06.2006 Gazette 2006/26)**

(54) **PROCEDE D'AIDE AU DEMARRAGE D'UN VEHICULE AUTOMOBILE ET DISPOSITIF ASSOCIE**

VERFAHREN ZUR UNTERSTÜTZUNG DES ANLASSENS EINES KRAFTFAHRZEUGS UND
ENTSPRECHENDE VORRICHTUNG

METHOD FOR ASSISTING IN SRARTING A MOTOR VEHICLE AND CORRESPONDING DEVICE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **20.12.2004 FR 0413598**

(43) Date de publication de la demande:
**19.12.2007 Bulletin 2007/51**

(73) Titulaire: **RENAULT S.A.S.
92100 Boulogne Billancourt (FR)**

(72) Inventeurs:
• **BOUTONNET, Francis
F-92100 Boulogne Billancourt (FR)**
• **PINEAU, Alexandre
F-91220 Bretigny (FR)**
• **REY, Pascal
F-91540 Mennecy (FR)**

(56) Documents cités:
**EP-A- 0 821 150         DE-A1- 10 225 448
DE-A1- 19 524 412         DE-A1- 19 806 665
US-A1- 2004 112 336**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé d'aide au démarrage d'un véhicule automobile par apport de couple moteur lors du démarrage dudit véhicule, et un dispositif associé.

L'invention concerne plus particulièrement un procédé d'aide au démarrage d'un véhicule automobile pouvant être utilisé sur tout type de véhicule équipé d'une boîte de vitesses mécanique et permettant de maîtriser le régime de fonctionnement du moteur, lors du démarrage du véhicule, afin d'obtenir un agrément de conduite particulièrement satisfaisant. On entend par « démarrage du véhicule », la transition d'un état où la vitesse du véhicule est nulle et la boîte de vitesses est débrayée, à un état où la vitesse du véhicule est non nulle et la boîte de vitesses est embrayée.

A l'heure actuelle, afin d'améliorer la sensation de confort lors de la mise en mouvement du véhicule automobile à partir d'une position d'arrêt, on cherche à diminuer au maximum les ruptures dans la continuité du mouvement d'avance du véhicule. De telles ruptures peuvent être provoquées par la hausse du poids général des véhicules et par l'augmentation du volume du collecteur du moteur dégradant sensiblement le couple du moteur, en terme de temps de réponse.

A cet effet, on connaît un procédé d'aide au démarrage d'un véhicule automobile dans lequel, après avoir détecté une vitesse de véhicule non nulle et un régime moteur décroissant, on calcule une consigne de régime de fonctionnement du moteur, et on applique, sur le couple moteur mesuré, un gain multiplicatif en fonction de l'écart entre la consigne de régime de fonctionnement du moteur et le régime de fonctionnement du moteur mesuré. Voir par example document US 2004/0112336 A1 où DE 198 06 665 A1.

Un tel procédé d'aide au démarrage présente l'inconvénient de ne pas permettre une compensation précise du couple moteur à apporter, générant une diminution de la progressivité de la pédale d'embrayage, ce qui engendre une difficulté pour le conducteur pour réaliser un démarrage sans discontinuité.

La présente invention a donc pour but de remédier à cet inconvénient et de prévoir un procédé d'aide au démarrage d'un véhicule automobile par apport de couple moteur permettant d'obtenir un agrément de conduite optimal.

A cet effet, l'invention a pour objet un procédé d'aide au démarrage d'un véhicule automobile par apport de couple moteur lors du démarrage dudit véhicule, comprenant les étapes au cours desquelles :

- on détermine des paramètres aptes à détecter le démarrage du véhicule automobile,
- on calcule une consigne de régime de fonctionnement du moteur à partir d'un paramètre apte à détecter la volonté du conducteur,
- on détermine un couple d'assistance au démarrage à partir de la consigne de régime de fonctionnement, et
- on utilise le couple d'assistance lors du démarrage du véhicule d'une vitesse nulle à une vitesse non nulle,
- on calcule la consigne de régime de fonctionnement en fonction de différentes valeurs du moment d'inertie du moteur, le passage d'une première valeur à une seconde valeur s'effectuant à partir d'un d'écart prédéterminé entre le régime de fonctionnement du moteur et un régime de fonctionnement mesuré.

Avec un tel procédé d'aide au démarrage, il devient ainsi possible d'obtenir un couple d'assistance au démarrage venant s'ajouter au couple moteur pour permettre un agrément de conduite directement adapté au souhait du conducteur. Le couple additionnel est déterminé à partir de la volonté du conducteur permettant une estimation particulièrement précise du couple à apporter.

Un tel procédé d'aide au démarrage présente l'avantage de pouvoir commuter entre un moment d'inertie correspondant à un état où la boîte de vitesses du véhicule est débrayée et un moment d'inertie correspondant à état où la boîte de vitesses est embrayée suivant le régime de fonctionnement mesuré afin d'estimer au mieux le niveau de couple à apporter et éviter ainsi une éventuelle apparition de rupture dans la continuité du mouvement d'avance du véhicule, lors de la phase de démarrage.

Dans un mode de mise en oeuvre du procédé, on calcule la consigne de régime de fonctionnement du moteur en incorporant un terme de filtrage pour obtenir un régime de fonctionnement sensiblement stable.

De préférence, on détermine le couple d'assistance au démarrage par dérivation de l'écart entre la consigne de régime de fonctionnement du moteur et le régime de fonctionnement du moteur.

De préférence, on commande le moteur, pendant l'utilisation du couple d'assistance, de manière à obtenir une réserve de couple.

Avec un tel procédé d'aide au démarrage, il devient ainsi possible, tout en respectant le couple demandé par le conducteur, de conserver une réserve de couple, par une stratégie moteur, permettant de répondre de façon instantanée à une éventuelle demande de couple supplémentaire sans être tributaire de la dynamique de l'admission d'air liée la taille du collecteur du moteur.

Dans un mode de mise en oeuvre du procédé, on commande le moteur de manière à obtenir une réserve de couple variable présentant une valeur maximale au début du démarrage et une valeur minimale à la fin du démarrage du véhicule.

De préférence, on commande le moteur en fonction d'une consigne de débit d'air pompé et d'un débit d'air estimé.

L'invention a également pour objet un dispositif d'aide au démarrage d'un véhicule automobile par apport de couple moteur lors du démarrage dudit véhicule comprenant un moyen de détermination des paramètres aptes à détecter le démarrage de véhicule automobile, un moyen d'estimation d'une consigne de régime de fonctionnement du moteur à partir d'un paramètre apte à détecter la volonté du conducteur, et un moyen de calcul d'un couple d'assistance au démarrage à partir de la consigne de régime de manière à utiliser ledit couple d'assistance lors du démarrage du véhicule d'une vitesse nulle à une vitesse non nulle.

Les paramètres représentatifs du démarrage de véhicule automobile comprennent un paramètre représentatif d'un enfoncement de la pédale d'accélérateur et/ou un paramètre représentatif du ratio entre la vitesse du véhicule et le régime de fonctionnement du moteur.

Avec un tel dispositif, il devient ainsi possible de déterminer un couple d'assistance au démarrage sans connaître l'état d'enfoncement de l'embrayage, permettant ainsi une compatibilité avec un grand nombre de définitions techniques du contrôle moteur.

L'invention et ses avantages seront mieux compris à l'étude de la description d'un mode de réalisation nullement limitatif, et illustré par les dessins annexés, sur lesquels :

- la figure 1 est un schéma-bloc du dispositif d'aide au démarrage selon la présente invention ; et
- la figure 2 est un graphique illustrant l'évolution de régime moteurs et de couples en fonction du temps, lors de la phase de démarrage.

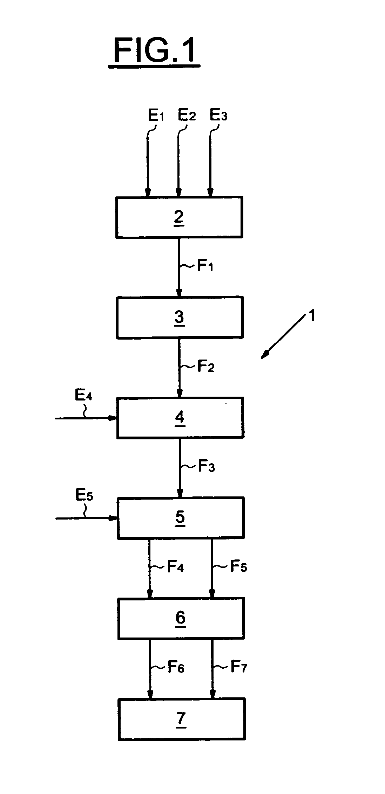

Sur la figure 1, on a représenté l'architecture générale d'un dispositif d'aide au démarrage selon l'invention désigné par la référence numérique générale 1. Sur cette figure, les flèches F1 à F7 correspondent à des phases du procédé d'aide au démarrage selon l'invention. Le dispositif 1 comprend un module de détermination 2 de paramètres représentatifs du démarrage du véhicule automobile, un module d'estimation 3 de la consigne du régime de fonctionnement du moteur qui communique avec le module de détermination 2, et un module de calcul 4 qui est dûment programmé pour calculer un couple d'assistance au démarrage à apporter au couple moteur pour obtenir un agrément de conduite satisfaisant et qui communique avec le module d'estimation 3. Le dispositif 1 est également pourvu d'un module de gestion 5 du couple d'assistance au démarrage, d'un moyen de pilotage 6 du moteur du véhicule qui communique avec le module de gestion 5, et d'un moyen 7 de suivi du couple d'assistance au démarrage relié au moyen de pilotage 6.

Le module de détermination 2 reçoit respectivement sur ses entrées $E_1$, $E_2$ et $E_3$, des données représentatives de l'état d'enfoncement de la pédale d'accélérateur *Pedacc* du véhicule, de la vitesse *Vveh* du véhicule, ainsi que le régime de fonctionnement du moteur $N$ du véhicule, fournies par des capteurs appropriés et qui sont utilisés pour déterminer et apprécier deux conditions d'activation de l'aide au démarrage.

A partir de ces données, pour déterminer si la première condition d'activation est remplie, le module de détermination 2 calcule le ratio entre la vitesse $\frac{Vveh}{N}$, du véhicule et le régime de fonctionnement $N$ du moteur : $\frac{Vveh}{N}$, et on compare ensuite ledit ratio par rapport à une valeur de référence, dite *Vmil.* La valeur de référence *Vmil* est choisie de manière à caractériser une longueur de boîte de vitesses. Cette valeur est ainsi définie par la vitesse atteinte par le véhicule automobile lorsque le régime moteur est de 1000 tours/minutes. Par exemple, un premier rapport de transmission d'une boîte de vitesses peut être caractérisé par une valeur *Vmil* de 7 km/h pour 1 000 tours/minute. On entend donc ici par « une valeur *Vmil* de 7 km/h pour 1 000 tours/minute », un véhicule automobile présentant une vitesse de 7 km/h pour un régime moteur de 1 000 tours/minute, lorsque le premier rapport de transmission de la boîte de vitesses est engagé. La valeur de référence *Vmil* à laquelle on compare le ratio "y" est la valeur *Vmil* du premier rapport de la boîte de vitesses.

Le module de détermination 2 effectue ainsi une comparaison entre le ratio de la vitesse *Vveh* du véhicule et le régime de fonctionnement du moteur $N$ par rapport à la valeur de référence *Vmil,* par l'intermédiaire d'un comparateur (non représenté). Si ledit ratio est inférieur à la valeur de référence *Vmil* alors la première condition d'activation de l'aide au démarrage du véhicule est remplie.

Le module de détermination 2 détecte également le couple demandé par le conducteur du véhicule par l'intermédiaire de l'enfoncement de la pédale d'accélérateur *Pedacc,* mesuré par un capteur (non représenté). La seconde condition d'activation est remplie lorsque le conducteur appui sur la pédale d'accélérateur.

Lorsque le module de détermination 2 a détecté que les conditions d'activation de l'aide au démarrage du véhicule sont remplies, il élabore une information représentative de l'activation d'aide au décollage et la transmet au module d'estimation 3 (Flèche $F_1$).

Le module d'estimation 3, à partir de l'état d'enfoncement de la pédale d'accélération correspondant à une consigne de couple prédéterminée, estime la consigne de régime de fonctionnement. Cette consigne de régime est calculée par l'équation E suivante:

$$N_{sp}(i) = N_{sp}(i-1) + \frac{dt}{J}\left[kC + (1-k)K(N - N_{sp}(i-1)\right]$$

où $N_{sp}(i)$ correspond à la consigne de régime de fonctionnement du moteur à l'instant i,
$N_{sp}(i-1)$ à la consigne de régime de fonctionnement du moteur à l'instant i-1,
$J$ le moment d'inertie du moteur du véhicule,
$C$ le couple demandé par le conducteur,
$N$ le régime de fonctionnement du moteur,
$k$ un coefficient de stabilisation, et
$K$ une constante de filtrage.

Le coefficient de stabilisation $k$ peut être calculé à partir de cartographies calibrables dépendant de la vitesse du véhicule automobile $Vveh,$ du ratio entre la vitesse du véhicule et le régime de fonctionnement du moteur $\frac{Vveh}{N}$, et du couple demandé par le conducteur C, lesdites données $Vveh,$ $\frac{Vveh}{N}$ et C pouvant être lues ou interprétées sur une mémoire ou variable d'états représentants des signaux décrivant l'environnement du véhicule.

Le coefficient de stabilisation k peut être calculé de la façon suivante : $k = \left[1 - f_2\left(\frac{Vveh}{N}\right)f_3\left(\frac{dC}{dt}\right)\right]$

dans laquelle $f_2$ est une fonction de $\frac{Vveh}{N}$ et représente la possibilité d'être en phase décollage, vue sur l'information $\frac{Vveh}{N}$, et $f_3$ est une fonction de $\frac{dC}{dt}$ et représente la possibilité d'être en phase décollage, vue sur l'information couple.

Le coefficient de stabilisation k permet de détecter une demande de couple du conducteur sensiblement constante et d'activer le filtre du premier ordre défini par $K(N-N_{sp}(i-1))$, le coefficient de stabilisation k étant égal à un lorsque la demande de couple est variable. Ledit filtre du premier ordre permet d'éviter des divergences du calcul de la consigne de régime de fonctionnement du moteur par le module d'estimation 3.

Durant le processus de calcul, le module d'estimation 3 détermine, dans un premier temps, la valeur de la consigne de régime de fonctionnement en utilisant une première valeur $J_1$ du moment d'inertie du moteur correspondant à un état où la boîte de vitesses est débrayée. Lorsque l'écart entre la consigne de régime de fonctionnement ainsi déterminée et le régime de fonctionnement du moteur mesuré est supérieure à une valeur seuil $N_{seuil,}$ le module d'estimation 3 utilise une seconde valeur $J_2$ du moment d'inertie du moteur correspondant à un état où la boîte de vitesses est embrayée sur le premier rapport de transmission pour déterminer la valeur de la consigne de régime de fonctionnement.

Le module d'estimation 3 transmet alors la valeur représentative de la consigne de régime de fonctionnement au module de calcul 4 du couple d'aide au démarrage (Flèche $F_2$).

Le module de calcul 4 reçoit également, sur l'une de ses entrées $E_4$, l'information relative au régime de fonctionnement du moteur mesuré. Le module de calcul 4 effectue alors la comparaison de la consigne de régime de fonctionnement avec le régime de fonctionnement mesuré, par l'intermédiaire d'un comparateur (non représenté). Le module de calcul 4, en fonction de l'écart entre la consigne de régime de fonctionnement et le régime de fonctionnement, détermine alors le couple d'assistance au démarrage à apporter au couple moteur pour obtenir un agrément de conduite satisfaisant. Le couple d'assistance au démarrage est calculé par l'intermédiaire d'un correcteur proportionnel dérivé (non représenté) et est transmis au module de gestion 5 du couple d'assistance au démarrage (Flèche $F_3$).

Le module de gestion 5 reçoit, en entrée $E_5$, l'information relative à la consigne de couple demandée par le conducteur par l'intermédiaire de la pédale d'accélérateur. Le module de gestion 5 détermine une première valeur de couple correspondant au couple d'assistance au démarrage et à la consigne de couple demandée, et une seconde valeur de couple correspond à une réserve de couple supérieur à la première consigne de couple.

La première valeur de couple correspond à une première valeur de couple de consigne $C_a$ à atteindre par le moteur en faisant varier l'avance à l'allumage par rapport une position d'avance optimale. La position d'avance optimale est la position pour laquelle le maximum de couple, pour un point de fonctionnement donné, est réalisé. On entend ici par « avance à l'allumage », l'angle de rotation de l'arbre moteur entre l'instant où l'élément d'allumage du moteur produit une étincelle et l'instant où le piston se trouve dans la position point mort haut. L'avance à l'allumage correspondant à la première valeur de consigne de couple peut par exemple être de 20°.

La seconde valeur de couple $C_b$ correspond à une deuxième valeur de couple de consigne à atteindre par le moteur en ouvrant le papillon, et en travaillant dans une position d'avance optimale. Lesdites première et seconde consignes sont toutes deux transmises au moyen de pilotage 6 du moteur (Flèches $F_4$ et $F_5$).

Le moyen de pilotage 6 pilote l'avance à l'allumage et le papillon du moteur en dégradant l'avance à l'allumage qui correspond à la première valeur de consigne, par exemple pour obtenir un angle de 5°, et en ouvrant de manière excessive le papillon, pour obtenir une valeur de couple égale à la première valeur de consigne. Par cette stratégie moteur, on respecte la consigne de couple demandée par le conducteur et le couple d'assistance tout en assurant une provision ou une réserve de couple disponible rapidement en jouant sur l'avance à l'allumage sans être tributaire de la dynamique de l'admission d'air liée principalement à la taille du collecteur du moteur.

Le moyen de pilotage 6 transmet au moyen de suivi 7 (Flèches $F_6$ et $F_7$) une consigne de débit d'air pompé $Q_{consigne}$ par le moteur et un débit pompé estimé $Q_{estimé}$. Si la valeur de la consigne de débit $Q_{consigne}$ est inférieure au débit estimé $Q_{estime}$, alors on diminue le couple fournit par le moteur en dégradant l'avance à l'allumage. Au contraire, si la valeur de la consigne de débit $Q_{consigne}$ est supérieure au débit estimé $Q_{estime}$, alors on augmente le couple fournit par le moteur en jouant sur l'avance à l'allumage et en consommant la provision de couple disponible pour que ladite provision de couple soit sensiblement nulle en fin de démarrage du véhicule automobile.

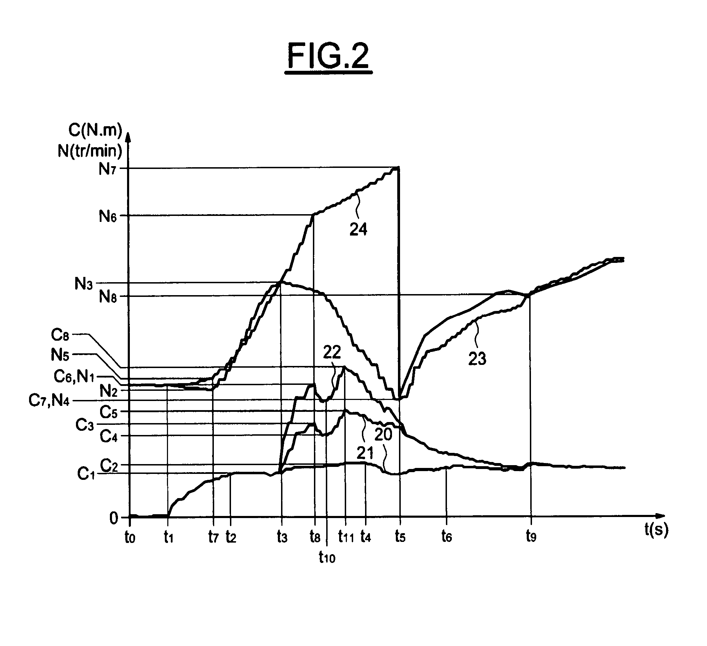

Sur la figure 2, les courbes 20 à 22 montrent respectivement l'évolution de la consigne de couple du moteur et desdites valeurs de couple $C_a$ et $C_b$ en fonction du temps, les courbes 23 et 24 illustrant l'évolution du régime de fonctionnement et de la consigne de régime de fonctionnement du moteur en fonction du temps.

La courbe 20, déterminée par l'enfoncement de la pédale d'accélérateur par le conducteur du véhicule automobile, comprend une première portion, entre l'instant $t_0$ et l'instant $t_1$, qui présente une consigne de couple sensiblement nulle. Une seconde portion de la courbe 20 croit progressivement, entre l'instant $t_1$ et l'instant $t_2$, pour atteindre une consigne de couple $C_1$, par exemple 35 N.m, puis se prolonge par une troisième portion, entre l'instant $t_2$ et l'instant $t_3$, sensiblement constante autour de la consigne de couple $C_1$. Une quatrième portion de la courbe 20, entre l'instant $t_3$ et l'instant $t_4$, est sensiblement constante autour d'une consigne de couple $C_2$, par exemple 45 N.m. Une cinquième portion est décroissante, entre l'instant $t_4$ et l'instant $t_5$, jusqu'à atteindre sensiblement la consigne de couple $C_1$. Une sixième portion de la courbe est sensiblement croissante, entre l'instant $t_5$ et l'instant $t_6$, jusqu'à atteindre sensiblement la consigne de couple $C_2$. A partir de l'instant $t_6$, la consigne de couple est sensiblement constante.

La courbe 23, représentant l'évolution du régime de fonctionnement du moteur détecté par un capteur, comprend une première portion, entre l'instant $t_0$ et l'instant $t_1$, sensiblement constante autour d'une vitesse de rotation du moteur $N_1$, par exemple 660 tours/minutes. Une seconde portion de la courbe 23, entre l'instant $t_1$ et l'instant $t_7$, est sensiblement décroissante entre ladite vitesse $N_1$ et une vitesse $N_2$, par exemple 630 tours/minutes. Une troisième portion croit de façon linéaire, entre l'instant $t_7$ et l'instant $t_3$, pour atteindre une vitesse de rotation $N_3$, par exemple 1200 tours/minutes. Une quatrième portion, entre l'instant $t_3$ et l'instant $t_5$, décroît jusqu'à une vitesse minimale $N_4$, par exemple 600 tours/minutes. Une cinquième portion de la courbe 20, s'étendant à partir de l'instant $t_5$, est sensiblement croissante.

La courbe 24 illustrant l'évolution de la consigne de régime de fonctionnement du moteur est déterminée à partir de l'équation E, ainsi que des courbes 20 et 23 précédemment décrites.

Une première portion de la courbe 24 est sensiblement confondue avec la portion de la courbe 23 entre l'instant $t_0$ et l'instant $t_1$. Une seconde portion, entre l'instant $t_1$ et l'instant $t_7$, est croissante jusqu'à une vitesse $N_5$, par exemple 700 tours/minutes. Une troisième portion, entre l'instant $t_7$ et l'instant $t_8$, croit linéairement jusqu'à une vitesse $N_6$, par exemple 1600 tours/minutes. Une quatrième portion, entre l'instant $t_8$ et l'instant $t_5$, augmente jusqu'à une vitesse $N_7$, par exemple 1900 tours/minutes, en présentant une pente inférieure à celle de la seconde portion. A l'instant $t_5$, la consigne de régime de fonctionnement subit une forte chute jusqu'à atteindre la vitesse de rotation $N_4$. Une cinquième portion, entre l'instant $t_8$ et l'instant $t_9$, est croissante jusqu'à une vitesse $N_8$, par exemple 1100 tours/minutes. Une sixième portion, à partir de l'instant $t_9$, de la courbe est sensiblement confondue avec la portion de la courbe 20, à partir de l'instant $t_4$.

La courbe 21, représentant l'évolution du couple de consigne et du couple d'assistance au décollage, comprend une première portion sensiblement confondue avec une partie de la courbe 22, entre l'instant $t_0$ et l'instant $t_3$. Une seconde portion, entre l'instant $t_3$ et l'instant $t_8$, est croissante jusqu'à atteindre une valeur de couple $C_3$, par exemple 80 N.m, qui se prolonge par une troisième portion décroissante, entre l'instant $t_8$ et l'instant $t_{10}$, jusqu'à atteindre une valeur de couple $C_4$, par exemple 65 N.m. Une quatrième portion est sensiblement croissante, entre l'instant $t_{10}$ et l'instant $t_{11}$, jusqu'à atteindre une valeur de couple $C_5$, par exemple 90 N.m.. Une cinquième portion est sensiblement décroissante, entre l'instant $t_{11}$ et l'instant $t_9$, puis est confondue avec la courbe 20 à partir de l'instant $t_9$.

La courbe 22, représentant l'évolution de la réserve de couple disponible, présente une allure générale sensiblement équivalente à celle de la courbe 21. Une première portion est sensiblement confondue avec la courbe 21, entre l'instant $t_0$ et l'instant $t_3$. Une seconde portion, entre l'instant $t_3$ et l'instant $t_8$, est croissante jusqu'à atteindre une valeur de couple $C_6$, par exemple 120 N.m, qui se prolonge par une troisième portion décroissante, entre l'instant $t_8$ et l'instant $t_{10}$, jusqu'à atteindre une valeur de couple $C_7$, par exemple 100 N.m. Une quatrième portion est sensiblement croissante, entre l'instant $t_{10}$ et l'instant $t_{11}$, jusqu'à atteindre une valeur de couple $C_8$, par exemple 135 N.m. Une cinquième portion est sensiblement décroissante, entre l'instant $t_{11}$ et l'instant $t_5$, puis est confondue avec la courbe 21.

La présente invention permet ainsi d'obtenir un couple d'assistance au démarrage venant s'ajouter au couple moteur pour permettre un agrément de conduite directement adapté au souhait du conducteur tout en permettant, grâce à une stratégie moteur, de conserver une réserve de couple disponible permettant de répondre rapidement à la volonté du conducteur du véhicule automobile.

## Revendications

1. Procédé d'aide au démarrage d'un véhicule automobile par apport de couple moteur lors du démarrage dudit véhicule comprenant les étapes au cours desquelles :

   - on détermine des paramètres aptes à détecter le démarrage du véhicule automobile,
   - on calcule une consigne de régime de fonctionnement du moteur à partir d'un paramètre apte à détecter la volonté du conducteur,
   - on détermine un couple d'assistance au démarrage à partir de la consigne de régime de fonctionnement, et
   - on utilise le couple d'assistance lors du démarrage du véhicule d'une vitesse nulle à une vitesse non nulle, **caractérisé en ce qu'**on calcule la consigne de régime de fonctionnement en fonction de différentes valeur du moment d'inertie du moteur du moment d'inertie du moteur, le passage d'une première valeur du moment d'inertie du moteur à une seconde valeur du moment d'inertie du moteur s'effectuant à partir d'un écart prédéterminé entre la consigne de régime de fonctionnement du moteur et un régime de fonctionnement mesuré.

2. Procédé selon la revendication 1, **caractérisé en ce qu'**on calcule la consigne de régime de fonctionnement du moteur en incorporant un terme de filtrage de manière à obtenir un régime de fonctionnement sensiblement stable.

3. Procédé selon la revendication 1 ou 2, **caractérisé en ce qu'**on détermine le couple d'assistance au démarrage par dérivation de l'écart entre la consigne de régime de fonctionnement du moteur et le régime de fonctionnement du moteur.

4. Procédé selon l'une quelconque des revendications précédentes, **caractérisé en ce qu'**on commande le moteur, pendant l'utilisation du couple d'assistance, de manière à obtenir une réserve de couple.

5. Procédé selon la revendication 4, **caractérisé en ce qu'**on commande le moteur de manière à obtenir une réserve de couple variable présentant une valeur maximale au début du démarrage et une valeur minimale à la fin du démarrage du véhicule.

6. Procédé selon la revendication 4 ou 5, **caractérisé en ce qu'**on commande le moteur en fonction d'une consigne de débit d'air pompé et d'un débit d'air estimé.

7. Dispositif d'aide au démarrage d'un véhicule automobile par apport de couple moteur lors du démarrage dudit véhicule comprenant un moyen de détermination (2) des paramètres aptes à détecter le démarrage de véhicule automobile, un moyen d'estimation (3) d'une consigne de régime de fonctionnement du moteur à partir d'un paramètre apte à détecter la volonté du conducteur, et un moyen de calcul (4) d'un couple d'assistance au démarrage à partir de la consigne de régime de manière à utiliser ledit couple d'assistance lors du démarrage du véhicule d'une vitesse nulle à une vitesse non nulle, **caractérisé en ce** le moyen d'obturation calcule la consigne de régime de fonctionnement en fonction de différentes valeur du moment d'inertie du moteur, le passage d'une première valeur du moment d'inertie du moteur à une seconde valeur du moment d'inertie du moteur s'effectuant à partir d'un d'écart prédéterminé entre la consigne de régime de fonctionnement du moteur et un régime de fonctionnement mesuré.

8. Dispositif selon la revendication 7, **caractérisé en ce que** les paramètres représentatifs du démarrage de véhicule automobile comprennent un paramètre représentatif d'un enfoncement de la pédale d'accélérateur.

9. Dispositif selon la revendication 7 ou 8, **caractérisé en ce que** les paramètres représentatifs du démarrage de véhicule automobile comprennent un paramètre représentatif du ratio entre la vitesse du véhicule et le régime de fonctionnement du moteur.

**Claims**

1.  Method for assisting with starting a motor vehicle by adding engine torque as said vehicle starts, involving the steps during which:

    - parameters able to detect that the motor vehicle is starting are determined,
    - an engine operating speed setpoint is calculated from a parameter able to detect the driver's wishes,
    - a starting assistance torque is determined from the operating speed setpoint, and
    - the assistance torque is used as the vehicle starts from a zero speed to a non-zero speed, **characterized in that** the operating speed setpoint is calculated as a function of various values of the moment of inertia of the engine, the switch from a first value of the moment of inertia of the engine to a second value of the moment of inertia of the engine occurring beyond a predetermined difference between the engine operating speed setpoint and a measured operating speed.

2.  Method according to Claim 1, **characterized in that** the engine operating speed setpoint is calculated incorporating a filtering term so as to obtain a substantially stable operating speed.

3.  Method according to Claim 1 or 2, **characterized in that** the starting assistance torque is determined by differentiating the difference between the engine operating speed setpoint and the engine operating speed.

4.  Method according to any one of the preceding claims, **characterized in that** the engine is operated, while the assistance torque is being used, in such a way as to obtain a reserve of torque.

5.  Method according to Claim 4, **characterized in that** the engine is operated in such a way as to obtain a variable reserve of torque which exhibits a maximum value when the vehicle begins to start and a minimum value when the vehicle finishes starting.

6.  Method according to Claim 4 or 5, **characterized in that** the engine is operated as a function of a pumped air flow rate setpoint and of an estimated air flow rate.

7.  Device for assisting with the starting of a motor vehicle by adding engine torque as said vehicle starts, comprising a determining means (2) for determining parameters able to detect that the motor vehicle is starting, an estimating means (3) for estimating an engine operating speed setpoint from a parameter able to detect the driver's wishes, and a calculating means (4) for calculating a starting assistance torque from the speed setpoint in such a way as to use said assistance torque when the vehicle is starting from a zero speed to a non-zero speed, **characterized in that** the estimating means calculates the operating speed setpoint as a function of various values of the moment of inertia of the engine, the switch from a first value of the moment of inertia of the engine to a second value of the moment of inertia of the engine occurring beyond a predetermined difference between the engine operating speed setpoint and a measured operating speed.

8.  Device according to Claim 7, **characterized in that** the parameters representative of the starting of the motor vehicle comprise a parameter representative of the depression of the throttle pedal.

9.  Device according to Claim 7 or 8, **characterized in that** the parameters representative of the starting of the motor vehicle comprise a parameter representative of the ratio between the speed of the vehicle and the engine operating speed.

**Patentansprüche**

1.  Starthilfeverfahren für ein Kraftfahrzeug durch Zuführen eines Antriebsdrehmoments beim Starten des Fahrzeugs, das die Schritte aufweist, während denen:

    - Parameter bestimmt werden, die in der Lage sind, das Starten des Kraftfahrzeugs zu erfassen,
    - ein Sollwert der Betriebsdrehzahl des Motors ausgehend von einem Parameter berechnet wird, der in der Lage ist, den Willen des Fahrers zu erfassen,
    - ein Starthilfe-Drehmoment ausgehend vom Betriebsdrehzahl-Sollwert bestimmt wird, und
    - das Starthilfe-Drehmoment beim Starten des Fahrzeugs von einer Geschwindigkeit Null zu einer Geschwindigkeit ungleich Null verwendet wird,

**dadurch gekennzeichnet, dass** der Betriebsdrehzahl-Sollwert abhängig von verschiedenen Werten des Trägheitsmoments des Motors berechnet wird, wobei der Übergang von einem ersten Wert des Trägheitsmoments des Motors auf einen zweiten Wert des Trägheitsmoments des Motors ausgehend von einer vorbestimmten Abweichung zwischen dem Betriebsdrehzahl-Sollwert des Motors und einer gemessenen Betriebsdrehzahl erfolgt.

2. Verfahren nach Anspruch 1, **dadurch gekennzeichnet, dass** der Betriebsdrehzahl-Sollwert des Motors berechnet wird, indem ein Filterungsterm eingefügt wird, um eine im Wesentlichen stabile Betriebsdrehzahl zu erhalten.

3. Verfahren nach Anspruch 1 oder 2, **dadurch gekennzeichnet, dass** das Starthilfe-Drehmoment durch Ableitung der Abweichung zwischen dem Betriebsdrehzahl-Sollwert des Motors und der Betriebsdrehzahl des Motors bestimmt wird.

4. Verfahren nach einem der vorhergehenden Ansprüche, **dadurch gekennzeichnet, dass** der Motor während der Nutzung des Starthilfe-Drehmoments so gesteuert wird, dass eine Drehmomentreserve erhalten wird.

5. Verfahren nach Anspruch 4, **dadurch gekennzeichnet, dass** der Motor so gesteuert wird, dass eine variable Drehmomentreserve erhalten wird, die einen maximalen Wert zu Beginn des Startens und einen minimalen Wert am Ende des Startens des Fahrzeugs hat.

6. Verfahren nach Anspruch 4 oder 5, **dadurch gekennzeichnet, dass** der Motor in Abhängigkeit von einem Sollwert des Durchsatzes von gepumpter Luft und einem geschätzten Luftdurchsatz gesteuert wird.

7. Starthilfevorrichtung für ein Kraftfahrzeugs durch Zuführen eines Antriebsdrehmoments beim Starten des Fahrzeugs, die ein Mittel (2) zur Bestimmung der Parameter, die in der Lage sind, das Starten des Kraftfahrzeugs zu erfassen, ein Mittel (3) zum Schätzen eines Betriebsdrehzahl-Sollwerts des Motors ausgehend von einem Parameter, der in der Lage ist, den Willen des Fahrers zu erfassen, und ein Mittel (4) zum Berechnen eines Starthilfe-Drehmoments ausgehend vom Drehzahl-Sollwert aufweist, um das Starthilfe-Drehmoment beim Starten des Kraftfahrzeugs von einer Geschwindigkeit Null zu einer Geschwindigkeit ungleich Null zu verwenden, **dadurch gekennzeichnet, dass** das Schätzmittel den Betriebsdrehzahl-Sollwert abhängig von verschiedenen Werten des Trägheitsmoments des Motors berechnet, wobei der Übergang von einem ersten Wert des Trägheitsmoments des Motors auf einen zweiten Wert des Trägheitsmoments des Motors ausgehend von einer vorbestimmten Abweichung zwischen dem Betriebsdrehzahl-Sollwert des Motors und einer gemessenen Betriebsdrehzahl erfolgt.

8. Vorrichtung nach Anspruch 7, **dadurch gekennzeichnet, dass** die für das Starten eines Kraftfahrzeugs repräsentativen Parameter einen für ein Eindrücken des Gaspedals repräsentativen Parameter enthalten.

9. Vorrichtung nach Anspruch 7 oder 8, **dadurch gekennzeichnet, dass** die für das Starten eines Kraftfahrzeugs repräsentativen Parameter einen für das Verhältnis zwischen der Geschwindigkeit des Fahrzeugs und der Betriebsdrehzahl des Motors repräsentativen Parameter enthalten.

# FIG.1

## FIG.2

EP 1 866 537 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040112336 A1
- DE 19806665 A1